# EUROPEAN PATENT SPECIFICATION

(11) **EP 3 827 308 B1**
(45) Date of publication and mention of the grant of the patent: **20.09.2023**
(21) Application number: 19841482.3
(22) Date of filing: 22.07.2019
(51) Int. Cl.: G02F 1/137, G02B 27/01, G02F 1/29, G02F 1/133

(54) **TUNABLE LENSES WITH ENHANCED PERFORMANCE FEATURES**
ABSTIMMBARE LINSEN MIT VERBESSERTEN LEISTUNGSMERKMALEN
LENTILLES ACCORDABLES AYANT DES CARACTÉRISTIQUES DE PERFORMANCE AMÉLIORÉES

(30) Priority: 23.07.2018 US 201862701857 P
(43) Date of publication of application: 02.06.2021
(73) Proprietor: Optica Amuka (A.A.) Ltd., 4951777 Petach Tikva (IL)
(72) Inventor: HADDAD, Yariv, 43700 Raanana (IL); VARDY, Yuval, 6962352 Tel Aviv (IL); ALON, Alex, 3057737 Binyamina (IL); YADIN, Yoav, 55900 Ganey Tikva (IL)
(74) Representative: Beck Greener LLP
(86) International application number: PCT/IB2019/056243
(87) International publication number: WO 2020/021431

(56) References cited:
- WO-A1-2014/049577
- US-A1- 2008 239 420
- US-A1- 2011 228 181
- US-A1- 2011 234 934
- US-A1- 2017 160 440
- US-A1- 2017 219 828
- US-A1- 2017 219 828
- US-A1- 2017 269 453
- US-A1- 2017 269 453

## Description

### FIELD OF THE INVENTION

The present invention relates generally to optical devices, and particularly to electrically-tunable lenses.

### BACKGROUND

Tunable lenses are optical elements whose optical characteristics, such as the focal length and/or the location of the optical axis, can be adjusted during use, typically under electronic control. Such lenses may be used in a wide variety of applications, such as in spectacles for vision correction and for augmented and virtual reality.

Electrically-tunable lenses typically contain a thin layer of a suitable electro-optical material, i.e., a material whose local effective index of refraction changes as a function of the voltage applied across the material. An electrode or array of electrodes is used to apply the desired voltages in order to locally adjust the refractive index to the desired value. Liquid crystals are the electro-optical material that is most commonly used for this purpose (wherein the applied voltage rotates the molecules, which changes the axis of birefringence and thus changes the effective refractive index), but other materials, such as polymer gels, with similar electro-optical properties can alternatively be used for this purpose.

Some tunable lens designs use an electrode array to define a grid of pixels in the liquid crystal, similar to the sort of pixel grid used in liquid-crystal displays. The refractive indices of the individual pixels may be electrically controlled to give a desired phase modulation profile. (The term "phase modulation profile" is used in the present description and in the claims to mean the distribution of the local phase shifts that are applied to light passing through the layer as the result of the locally-variable effective refractive index over the area of the electro-optical layer of the tunable lens, relative to the phase shift that is applied to light passing through the layer when no electrical power is applied.) Lenses using grid arrays of this sort are described, for example, in U.S. Patent 7,475,985.

PCT International Publication WO 2014/049577 describes an optical device comprising an electro-optical layer, having an effective local index of refraction at any given location within an active area of the electro-optical layer that is determined by a voltage waveform applied across the electro-optical layer at the location. An array of excitation electrodes, including parallel conductive stripes extending over the active area, is disposed over one or both sides of the electro-optical layer. Control circuitry applies respective control voltage waveforms to the excitation electrodes and is configured to concurrently modify the respective control voltage waveforms applied to excitation electrodes so as to generate a specified phase modulation profile in the electro-optical layer.

PCT International Publication WO 2015/186010 describes adaptive spectacles, which include a spectacle frame and first and second electrically-tunable lenses, mounted in the spectacle frame. In one embodiment, control circuitry is configured to receive an input indicative of a distance from an eye of a person wearing the spectacles to an object viewed by the person, and to tune the first and second lenses in response to the input. Other types of electrically tunable lenses and aspects of their operation are described in PCT International Publication WO 2017/216716 US2008/239420 A1 and US2017/269453 A1 disclose additional prior art optical apparatuses.

In some applications, such as in adaptive spectacles, it is desirable that an electrically-tunable lens be capable of rapid switching of its phase modulation profile, for example in response to movements and changes in focal distance of the eye. In this regard, PCT International Publication WO 2017/182906 describes the application of overshoot and undershoot voltages in switching between different sets of control voltage waveforms, corresponding to two different focal powers. The higher voltage differences promote faster switching of the phase modulation profile in the liquid crystal in the lens.

As noted earlier, electronically-tunable lenses may be used in augmented and virtual reality applications. Virtual reality systems show a user a virtual scene, typically using a near-eye display with collimating optics to enable sharp vision from a close distance. Augmented reality systems show a user virtual content over a real-world scene, typically using a transparent (or semitransparent) light guide that enables viewing of the real world through it, and projects the virtual content into the user's eyes.

U.S. Patent 9,304,319, for example, describes an augmented reality system with a see-through display device that includes a variable focus lens a user looks through. A focal region adjustment unit automatically focuses the variable focus lens in a current user focal region. A microdisplay assembly attached to the see-through display device generates a virtual object for display in the user's current focal region by adjusting its focal region.

### SUMMARY

Embodiments of the present invention that are described hereinbelow provide improved electrically-tunable optical devices, as well as systems based on such devices and methods for their control.

There is therefore provided, in accordance with an embodiment of the invention, optical apparatus, including a transparent envelope and an electro-optical layer, contained within the envelope and having an effective local index of refraction at any given location that is determined by a voltage waveform applied across the electro-optical layer at the location. An array of excitation electrodes is disposed over a surface of the transparent envelope. Control circuitry is configured to apply voltage waveforms to the excitation electrodes so as to generate across at least a part of the active area of the electro-optical layer a phase modulation profile including spatially alternating peaks and troughs separated by phase transitions chosen so as to emulate a Fresnel lens, while the troughs have respective phase modulation depths that vary by at least one quarter wavelength at a nominal wavelength of 500 nm across at least the part of the active area of the electro-optical layer that emulates the Fresnel lens.

In a disclosed embodiment, the respective phase modulation depths of the troughs vary by at least one half wavelength at the nominal wavelength across the part of the active area of the electro-optical layer that emulates the Fresnel lens. In another embodiment, the phase transitions have respective amplitudes that increase monotonically from a central zone of the Fresnel lens outward toward a periphery of the part of the active area of the electro-optical layer that emulates the Fresnel lens.

In some embodiments, the phase modulation depths at the troughs in at least a central zone of the Fresnel lens are at least four wavelengths of light at the nominal wavelength.

Additionally or alternatively, the peaks have respective peak phase modulations that vary across the part of the active area of the electro-optical layer that emulates the Fresnel lens by at least one quarter wavelength at the nominal wavelength.

Further additionally or alternatively, the array of excitation electrodes has an average pitch, and the peaks in the phase modulation profile are spaced apart by integer multiples of a value that is at least three times the average pitch.

In some embodiments, the excitation electrodes include parallel conductive stripes extending across a first surface of the transparent envelope, and the apparatus includes a transparent common electrode on a second surface of the transparent envelope, opposite the first surface, and wherein the control circuitry is configured to apply the voltage waveforms to the excitation electrodes so that the phase modulation profile emulates a cylindrical Fresnel lens.

Typically, the control circuitry is configured to modify the voltage waveforms so as to change a focal power of the Fresnel lens and/or to shift and optical center of the Fresnel lens emulated by the phase modulation profile. In some embodiments, the control circuitry is configured to apply the voltage waveforms so that outside the part of the active area that is in proximity to the optical center of the Fresnel lens, the electro-optical layer applies a constant phase modulation to light that is incident on the apparatus.

In a disclosed embodiment, the electro-optical layer includes a liquid crystal.

There is also provided, in accordance with an embodiment of the invention, an augmented reality (AR) system, including an AR display configured to project an image with a given linear polarization toward an eye of a viewer while allowing the viewer to view a scene through the display. An electrically-tunable lens, including an optical phase modulator configured to focus light only of the given linear polarization, is positioned between the display and the eye. A controller is coupled to identify a location of an item of interest in the projected image, and to drive the optical phase modulator to apply a refractive correction within an area of the electrically-tunable lens surrounding an axis running from the eye to the identified location, while applying no refractive correction by the optical phase modulator outside the area.

In a disclosed embodiment, there is no polarizer interposed between the scene and the eye and no further electrically-tunable lens interposed between the scene and the AR display.

In some embodiments, the controller is configured to adjust the refractive correction responsively to a virtual distance to the location of the item of interest in the image that is projected toward the eye. Additionally or alternatively, the controller is configured to identify a change in the location or in the item of interest, and to shift the area within which the refractive correction is applied responsively to the identified change.

In a disclosed embodiment, the system includes an eye tracker, which is configured to identify a direction of gaze of the eye, wherein the controller is configured to identify the location of the item of interest responsively to the direction of gaze.

Typically, the area over which the refractive correction is applied by the optical phase modulator has an angular width, relative to the eye, that is no greater than 20°, or even no greater than 5°.

Additionally or alternatively, the area over which the refractive correction is applied defines a viewing aperture of the electrically-tunable lens, and the controller is configured to drive the display to blur a part of the image that is projected outside the viewing aperture.

There is additionally provided, in accordance with an embodiment of the invention, a method for optical correction, which includes providing an electro-optical modulator including a transparent envelope containing an electro-optical layer having an effective local index of refraction at any given location that is determined by a voltage waveform applied across the electro-optical layer at the location, with an array of excitation electrodes disposed over a surface of the transparent envelope. Voltage waveforms are applied to the excitation electrodes so as to generate across at least a part of the active area of the electro-optical layer a phase modulation profile including spatially alternating peaks and troughs separated by phase transitions chosen so as to emulate a Fresnel lens, while the troughs have respective phase modulation depths that vary by at least one quarter wavelength at a nominal wavelength of 500 nm across at least the part of the active area of the electro-optical layer that emulates the Fresnel lens.

There is further provided, in accordance with an embodiment of the invention, a method for vision correction, which includes projecting an image with a given linear polarization from an augmented reality (AR) display toward an eye of a viewer while allowing the viewer to view a scene through the display. An electrically-tunable lens, including an optical phase modulator configured to focus light only of the given linear polarization, is positioned between the display and the eye. A location of an item of interest in the projected image is identified, and the optical phase modulator is driven to apply a refractive correction within an area of the electrically-tunable lens surrounding an axis running from the eye to the identified location, while applying no refractive correction by the optical phase modulator outside the area.

There is moreover provided, in accordance with an embodiment of the invention, optical apparatus, including a transparent envelope and an electro-optical layer, contained within the envelope and having an effective local index of refraction at any given location that is determined by a voltage waveform applied across the electro-optical layer at the location, having an available dynamic phase modulation range determined by a thickness and a range of effective local index of refraction of the electro-optical layer. An array of excitation electrodes is disposed over a surface of the transparent envelope. Control circuitry is configured to apply voltage waveforms to the excitation electrodes so as to generate across at least a part of the active area of the electro-optical layer a phase modulation profile including spatially alternating peaks and troughs separated by phase transitions chosen so as to emulate a Fresnel lens, while applying a phase modulation over at least 90% of the part of the active area emulating the Fresnel lens that is less than 70% of the available dynamic phase modulation range of the electro-optical layer.

In some embodiments, the phase modulation applied over at least 90% of the part of the active area emulating the Fresnel lens is less than 50% of the dynamic phase modulation range of the electro-optical layer.

Additionally or alternatively, the voltage waveforms are chosen so that an unused lower part of the available dynamic phase modulation range below the troughs has an extent that is larger than an unused upper part of the available dynamic phase modulation range above the peaks. In some embodiments, the extent of the unused lower part of the available dynamic phase modulation range below the troughs is larger than twice the unused upper part of the available dynamic phase modulation range above the peaks.

There is furthermore provided, in accordance with an embodiment of the invention, a method for optical correction, which includes providing an electro-optical modulator including a transparent envelope containing an electro-optical layer having an effective local index of refraction at any given location that is determined by a voltage waveform applied across the electro-optical layer at the location, with an array of excitation electrodes disposed over a surface of the transparent envelope, the electro-optical modulator having an available dynamic phase modulation range determined by a thickness and a range of effective local index of refraction of the electro-optical layer. Voltage waveforms are applied to the excitation electrodes so as to generate across at least a part of the active area of the electro-optical layer a phase modulation profile including spatially alternating peaks and troughs separated by phase transitions chosen so as to emulate a Fresnel lens, while applying a phase modulation over at least 90% of the part of the active area emulating the Fresnel lens that is less than 70% of the available dynamic phase modulation range of the electro-optical layer.

The present invention will be more fully understood from the following detailed description of the embodiments thereof, taken together with the drawings in which:

### BRIEF DESCRIPTION OF THE DRAWINGS

Figs. 1A and 1B are schematic front and sectional views, respectively, of an augmented reality system that incorporates electrically-tunable lenses, in accordance with an embodiment of the invention;
Fig. 2 is a schematic sectional view of an electrically-tunable optical phase modulator, in accordance with an embodiment of the invention;
Figs. 3A, 3B and 3C are plots that schematically illustrate phase modulation profiles applied by an electrically-tunable lens, in accordance with an embodiment of the invention;
Figs. 4A, 4B and 4C are plots that schematically illustrate phase modulation profiles applied by an electrically-tunable lens, in accordance with another embodiment of the invention;
Fig. 5 is a plot that schematically illustrate a phase modulation profile applied by an electrically-tunable lens, in accordance with another embodiment of the invention; and
Fig. 6 is a schematic pictorial illustration of the operation of an augmented reality system incorporating an electrically-tunable lens, in accordance with an embodiment of the invention.

### DETAILED DESCRIPTION OF EMBODIMENTS

### OVERVIEW

Tunable lenses offer major advantages over conventional static lenses in ophthalmic use. For example, tunable spectacle lenses can dynamically adjust their focal lengths for different object distances, as an aid to individuals who have lost their natural ability to accommodate for distance due to presbyopia or aphakia. Tunable spectacle lenses can also adjust their optical power to compensate for eye fatigue and different lighting conditions and can even be shared by different people with different prescriptions. The above-mentioned PCT International Publications WO 2014/049577 and WO 2015/186010, for example, describe technological means that can be applied in producing such lenses and in controlling their focal properties.

The above-mentioned PCT Patent Application PCT/IB2018/054957 (published as WO 2019/012385) describes the use of electrically-tunable lenses for dynamic vision correction, particularly in virtual reality and augmented reality systems. In these augmented reality (AR) systems, one or more electrically-tunable lenses are positioned in line with an AR projection display. A controller receives information on the direction and the distance to an item of interest projected by the AR system (based on the virtual content, eye tracking information or other methods), as well as information on the distance-accommodation capability of the viewer's eyes. Based on this information, the controller sets and varies the refractive power and optical center of the dynamic lens or lenses. The viewer is thus able to view comfortably both the projected AR display and the real-world scene on which it is superimposed, with minimal eye strain.

Electrically-tunable lenses that use a liquid crystal (LC) as their electro-optical medium are generally polarization-dependent, meaning that the lens will refract light of one linear polarization but will have no effect on the orthogonal polarization. PCT/IB2018/054957 describes various solutions to this limitation, such as using a pair of electrically-tunable lenses with orthogonal polarizations, or using a polarizer with the same polarization as the electrically-tunable lens, in line with the display, to filter out light of the orthogonal polarization. As still another alternative, a pair of electrically-tunable lenses with the same polarization and complementary refractive powers may be used, with one lens between the display and the eye and the other lens between the display and the real-world scene that is viewed through the display.

These solutions, although effective, can be cumbersome, since they require multiple optical elements and may reduce the amount of light reaching the viewer's eye. Some embodiments of the present invention address this problem by providing an AR system that requires only a single electrically-tunable lens, without a polarizer, to facilitate optical accommodation by the viewer. In these embodiments, an AR display projects an image with a given linear polarization toward the eye of a viewer while allowing the viewer to view a scene through the display. An electrically-tunable lens configured to focus light only of the same linear polarization as the display is positioned between the display and the eye. (In a binocular AR system, electrically-tunable lenses of this sort can be placed in front of both eyes.)

A controller identifies the location of an item of interest in the projected image and thus defines an axis running from the eye to this location. The controller then drives the electrically-tunable lens to apply a refractive correction within an area of the electrically-tunable lens surrounding this axis, while applying no refractive correction outside the area. The area over which the refractive correction is applied is typically narrow, and thus defines a viewing aperture with a narrow angular width relative to the field of view of the eye, for example no greater than 20°, or even less, for example only in the foveal are of vision, which is typically no more than 5° wide. Therefore, the item of interest will appear to the viewer to be in focus, while light passing through the display and lens outside the area of the item will be unaffected by the refractive correction, regardless of polarization.

When the refractive correction is applied over only a small part of the area of the electrically-tunable lens, however, optical artifacts can occur in the region of transition between the refracting and non-refracting areas of the lens. PCT/IB2018/054957 describes waveforms that can be applied to the excitation electrodes in the transition region in order to provide a gradual transition of optical power and suppress these artifacts. Parts of the AR display that fall within these transition regions, however, may appear to the viewer to be distorted and thus cause visual distraction to the viewer. To mitigate this sort of distortion, in some embodiments the controller drives the display to blur parts of the AR image that are projected outside the viewing aperture of the electrically-tunable lens. Because these areas are, in any case, outside the viewer's area of sharp foveal vision, the viewer will not be aware that they are blurred.

When there are changes in the virtual distance and the direction to the location of the item of interest in the AR display, the controller in the AR system detects these changes and adjusts the area of refractive correction accordingly. (The detection may be based on eye tracking, for example, and/or on the content of the image projected by the AR display.) It is highly desirable for this purpose that the electrically-tunable lens be capable of changing its phase modulation profile rapidly (as noted in the above-mentioned PCT International Publication WO 2017/182906).

This sort of fast response can be facilitated by using a thin liquid crystal layer as the electro-optical layer. Using a thin liquid crystal layer, however, limits the dynamic range of the phase modulation that can be achieved by the lens. (The dynamic phase modulation range, or equivalently, the phase modulation depth, expressed in wavelengths of light at a nominal wavelength, such as 500 nm, is proportional to the birefringence and the thickness of the liquid crystal.) Under these circumstances, the control circuitry of the electrically-tunable lens may advantageously drive the electro-optical medium to emulate a Fresnel lens, taking greater advantage of the limited modulation range. For this purpose, the control circuitry applies voltage waveforms to the excitation electrodes so as to generate, across at least a part of the active area of the electro-optical layer (i.e., the area excited by the electrodes), a phase modulation profile comprising spatially alternating peaks and troughs separated by phase transitions of appropriate amplitudes.

To accelerate changes in the phase modulation profile when they are required, it is further desirable that the control circuitry apply the voltage waveforms to the excitation electrodes in a narrow range of relatively high voltages. As a result, in the embodiments described below, the minimum voltages of the waveforms are sufficiently high, at least in the central zone of the Fresnel lens, so that even in the troughs, the electro-optical layer gives rise to a substantial phase modulation, relative to the dynamic range of phase modulation. As a result, for example, the phase modulation applied over at least 90% of the active area of the Fresnel lens may be less than 70% of the available dynamic phase modulation range of the electro-optical layer, or even less than 50% of the available dynamic phase modulation range. Because of these limitations, the phase transitions in the phase modulation profile of the Fresnel lens may be only one or two wavelengths, while the phase modulation depth in the troughs is at least four wavelengths.

This small range of the phase transitions can give rise to optical artifacts due to the high density of peaks and troughs across the area of the electro-optical layer. To overcome these difficulties, in some embodiments of the present invention, the control circuitry of the electrically-tunable lens applies waveforms of different voltages to the excitation electrodes, so that at least the respective phase modulation depths of the troughs vary by at least one quarter wavelength, and possibly one half wavelength or more, at a nominal wavelength of 500 nm across at least the part of the active area of the electro-optical layer that emulates the Fresnel lens. Additionally or alternatively, the peak modulation depths may vary in a similar fashion.

This arrangement enables operation of the electrically-tunable lens as a Fresnel lens with both good optical quality and fast response, for example when changes are needed in the focal power or optical center of the Fresnel lens. Furthermore, the locations of the peaks and troughs can be designed so that the distances between the peaks are integer multiples of a given minimal distance, so that when the lens is shifted laterally by multiples of the minimal distance, the locations of the peaks and troughs do not change much. This minimal distance may advantageously be at least three times the average pitch of the array of excitation electrodes that is used to create the phase modulation profile.

Although the features of such electrically-tunable lenses are described herein, for the sake of concreteness and clarity of illustration, mainly in the context of AR systems, these sorts of lenses may alternatively be used as generic spectacle lenses, as well as in other optical applications. Conversely, although the AR systems described hereinbelow specifically use this sort of electrically-tunable Fresnel lenses, the principles of the present invention may alternatively be implemented using electrically-tunable lenses of other types.

### AR SYSTEM WITH ELECTRICALLY-TUNABLE LENSES

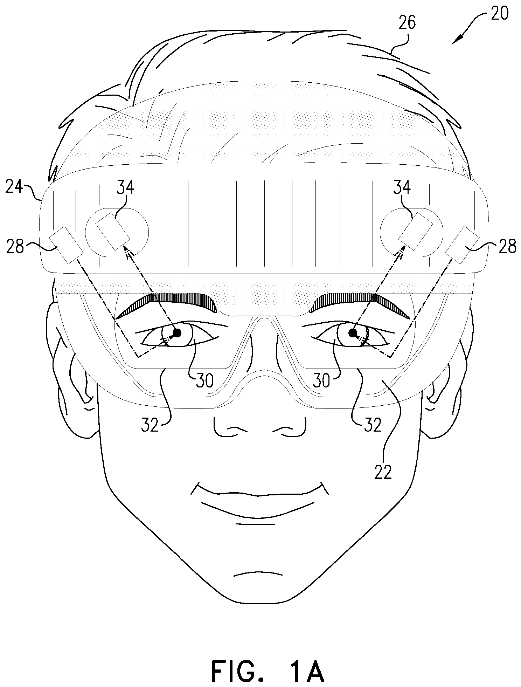

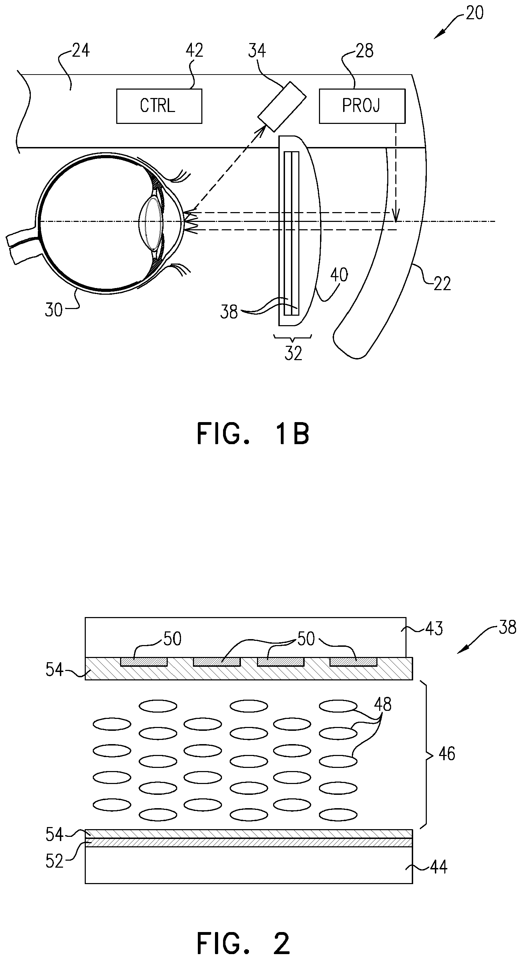

Figs. 1A and 1B are schematic front and sectional views, respectively, of an AR system 20 that incorporates electrically-tunable lenses 32, in accordance with an embodiment of the invention. System 20 comprises an AR display 22, which projects AR images toward one or both eyes 30 of a viewer 26, while allowing the viewer to view a scene through the display. In the pictured example, display 22 is mounted on a frame 24, which contains or otherwise supports one or more miniature image projectors 28 (typically one for each eye). Each projector 28 projects images of a given linear polarization toward display 22, which reflects the image beams toward eyes 30 without changing the polarization. (Alternatively or additionally, display 22 may have a polarizing effect.)

Display 22, typically comprises a transparent waveguide, into which the image projected by projector 28 is coupled by suitable optics. The surface of the waveguide facing viewer 26 comprises a structure, such as a hologram, a diffraction grating, or a beamsplitter with partially reflecting facets, to deflect the image toward the viewer. Displays of this sort include, for example, HoloLens, available from Microsoft Corporation (Redmond, Washington), and the DK-Vision development kit available from Lumus (Ness Ziona, Israel).

Electrically-tunable lenses 32 are positioned between display 22 and eyes 30. As shown in Fig. 1B, lenses 32 may comprise compound lenses, including a static lens 40 and one or more optical phase modulators 38, which are chosen and configured to provide the corrections necessary for the ocular refraction and accommodation capabilities of viewer 26. Optical phase modulators 38, which are described in greater detail hereinbelow with reference to Fig. 2, are configured to focus light of the same linear polarization as is projected by projector 28. Details of the design and operation of such lenses are described in the above-mentioned PCT Patent Application PCT/IB2018/054957. In the present embodiment, however, in system 20 there is no polarizer interposed between the eyes 30 and the scene that can be viewed through display 22, nor is there any further electrically-tunable lens interposed between display 22 and the scene.

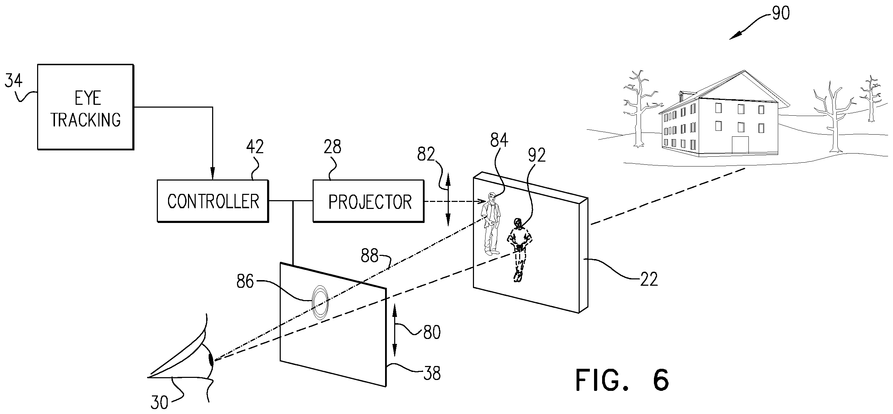

A controller 42 identifies the location of an item of interest in the projected image and drives optical phase modulators 38 in lenses 32 to apply an appropriate refractive correction, but only within an area of each lens surrounding an axis running from the eye to the identified location. Typically, the optical phase modulators apply no refractive correction outside the area (although static lens 40 may apply a fixed refractive correction over the entire field of view). The refractive correction applied by optical phase modulators 38 is chosen so as to adjust for the virtual distance from eyes 30 to the location of the identified item of interest. When controller 42 identifies a change in the location of the current item of interest, or a change in the item of interest itself (for example, because the viewer's attention has shifted to a different item in the display), controller 42 will drive optical phase modulators 38 to shift the areas within which they apply a refractive correction in response to the identified change. Further details of the operation of controller 42 and lenses 32 in applying these refractive corrections are described hereinbelow with reference to Fig. 6.

Controller 42 may identify the direction to the item of interest, as well as the accommodation distance, based on a variety of possible inputs. In the pictured embodiment, for example, one or more eye trackers 34 built into or supported by frame 24 may detect the gaze angles of eyes 30. Controller 42 may then identify the location of the item of interest and the area in which to apply the refractive correction on this basis. The gaze angles of the two eyes may differ in viewing nearby objects, and controller 42 may detect and apply the convergence of the gaze angles in determining and accommodating for the distance at which eyes 30 are attempting to focus. Alternatively or additionally, controller 42 may receive an input, for example from projector 28, indicating the location of an item of interest in the images projected by display 22 and may use this information independently or in conjunction with the gaze angles indicated by eye trackers 34.

Controller 42 typically comprises a programmable processor, which is programmed in software and/or firmware to carry out the functions that are described herein. Alternatively or additionally, controller 42 comprises hard-wired and/or programmable hardware logic circuits, which carry out at least some of the functions of the controller. Although controller 42 is shown in the figures, for the sake of simplicity, as a single, monolithic functional block, in practice the controller may comprise a single chip or a set of two or more chips, with suitable interfaces for receiving and outputting the signals that are illustrated in the figures and are described in the text.

Fig. 2 is a schematic sectional view of optical phase modulator 38, in accordance with an embodiment of the invention. Optical phase modulator 38 comprises an electro-optical layer 46, contained in an envelope comprising an upper substrate 43 and a lower substrate 44, which comprise a transparent material, for example, glass. Layer 46 comprises a liquid crystal material, which is typically contained by suitable encapsulation, as is known in the art. Substrates 43 and 44 can be coated on their insides with a polyimide alignment layer 54 (for example PI-2555, produced by Nissan Chemical Industries Ltd., Japan), which contains linear alignment structures in contact with layer 46, which cause liquid crystal molecules 48 to line up in a desired parallel orientation. The linear alignment structures can comprise actual physical grooves in alignment layer 54, for example, or alternatively molecular structures in the alignment layer that exert electrical aligning forces on the liquid crystal molecules.

Conductive electrodes 50 and 52 are disposed over opposing first and second sides of electro-optical layer 46. Electrodes 50 and 52 comprise a transparent, conductive material, such as indium tin oxide (ITO), as is known in the art, which is deposited on the surfaces of substrates 43 and 44, respectively. (Alternatively, non-transparent excitation electrodes may be used, as long as they are thin enough so that they do not cause disturbing optical effects.) Although for the sake of visual clarity, only a few electrodes are shown in Fig. 2, in practice, for good optical quality, optical phase modulator 38 will typically comprise at least 100 stripe electrodes for excitation, and possibly even 400 or more.

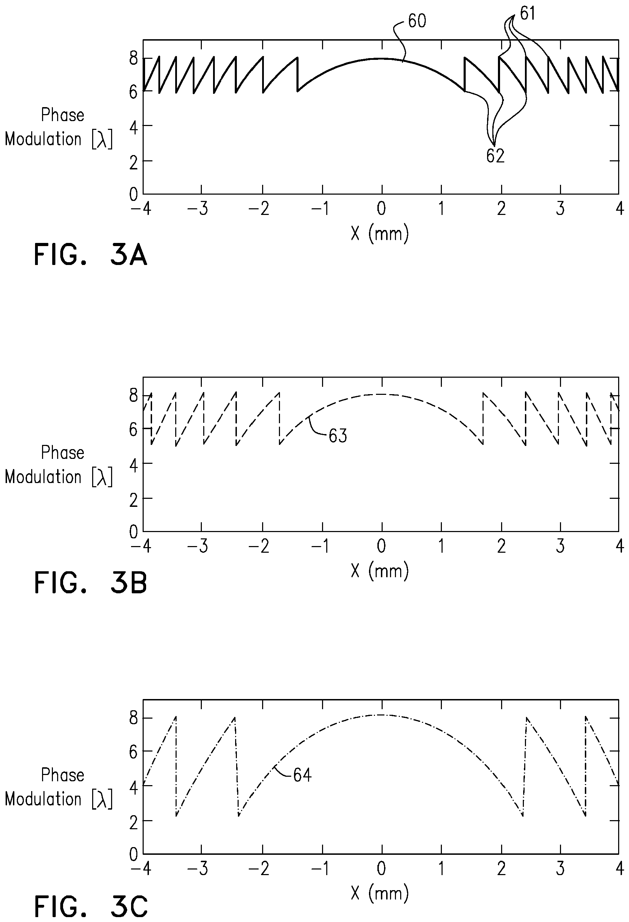

Electrodes 50 in the pictured embodiment are arranged as an array of parallel stripes. On the opposite side of layer 46, electrodes 52 may comprise stripes perpendicular to electrodes 50, which enable control circuitry (such as controller 42, together with suitable analog drive circuits) to apply two-dimensional voltage patterns across layer 46. Alternatively, electrode 52 may comprise a uniform layer on substrate 44, defining a common electrode capable of serving as an electrical ground plane. In this latter case, only one-dimensional voltage patterns can be applied across layer 46, which can be used to create phase modulation profiles that emulate cylindrical lenses (such as a cylindrical Fresnel lens in the embodiments of Figs. 3A-C, 4A-C and 5). As shown in Fig. 1B, two such optical phase modulators 38 in series, with electrodes 50 oriented orthogonally one to the other, can be used in lens 32 to generate two-dimensional optical modulation patterns. Both optical phase modulators in this case are configured to focus light of the same linear polarization.

Due to the behavior of liquid crystal molecules 48, electro-optical layer 46 has an effective local index of refraction at any given location within the active area of the layer that is determined by the voltage waveform that is applied across the electro-optical layer at that location. Controller 42 applies the appropriate control voltage waveforms to electrodes 50 and 52 so as to modify the optical phase modulation profile of electro-optical layer 46. When used in spectacles, such as in lens 32, the phase modulation profile is chosen to cause rays of optical radiation that are incident on optical phase modulator 40 to converge or diverge with a desired focal power. For strong focal power, the phase modulation profile may comprise a Fresnel profile, with sharp peaks and troughs alternating spatially across at least a part of the active area of electro-optical layer 46. Alternatively or additionally, the control voltage waveforms may be chosen so as to give rise to a smooth refractive phase modulation profile.

Further details of a variety of electrode structures that can be used in electrically-tunable lenses, as well as the control voltage waveforms that may be applied to such electrodes in order to generate various sorts of phase modulation profiles, are described in the above-mentioned WO 2014/049577 and WO 2015/186010. These details are omitted here for the sake of brevity.

### EMULATION OF FRESNEL LENSES

Figs. 3A, 3B and 3C are plots that schematically illustrate Fresnel-type phase modulation profiles 60, 63 and 64, respectively, that are applied by an electrically-tunable lens, in accordance with an embodiment of the invention. Profiles 60, 63 and 64 may be applied, for example, by optical phase modulator 38, as shown and described above. The plots show the phase modulation of light at a nominal wavelength, for example λ = 500 nm, as a function of distance X (in mm) from the optical center of the phase modulation pattern. (These plots and the subsequent plots show the absolute value of phase modulation; in general, in liquid crystal materials, the local refractive index, and hence the phase modulation, can either increase or decrease with increasing applied voltage, relative to the refractive index with no voltage applied, depending on the material type.) As noted earlier, controller 42 may modify the voltage waveforms applied to electrodes 50 so as to change the focal power and to shift the optical center of the lens.

Profiles 60, 63 and 64 are chosen so as to emulate a Fresnel lens, meaning that they comprise spatially alternating peaks 61 and troughs 62 of phase modulation, separated by phase transitions, which emulate the thickness variations of a conventional Fresnel lens. The phase modulation refers to the phase retardation of light at the nominal wavelength passing through the electro-optical layer when voltage is applied, relative to the phase retardation of light passing through the layer when zero voltage is applied. In this example the maximal modulation of the electro-active layer (when maximal voltage is applied) is nine wavelengths. In all of profiles 60, 63 and 64, the driving voltages are chosen so that only a part of the dynamic range of phase modulation is used. For example, profile 60 uses a range of 6-8 wavelengths; profile 63 uses a range of 5-8 wavelengths; and profile 64 uses a range of 2-8 wavelengths. In these example, the phase modulation applied by electro-optical layer 46 is less than 70% of the available dynamic phase modulation range of the electro-optical layer over at least 90% of the part of the active area emulating the Fresnel lens; and in profiles 60 and 62 the phase modulation applied by electro-optical layer 46 is less than 50% of the available dynamic phase modulation range of the electro-optical layer over at least 90% of the part of the active area emulating the Fresnel lens.

Reducing the range of modulation results in more Fresnel phase discontinuities. Switching between different phase modulation values within a smaller range, however, results in faster response times, especially if this range consists of relatively high voltages as in the examples shown in Figs. 3A-C. Therefore it is beneficial to use less than 70% of the available dynamic phase modulation range of the phase modulator, or even less than 50%, as shown in the present examples.

The upper limit of the plots shown in Figs. 3A-C represents the maximal phase modulation that can be provide by a liquid crystal layer of the given thickness, when driven at the maximal useful voltage. (Above this voltage level, no increase in phase modulation is achieved.) The figures thus show low and high unused modulation ranges that correspond respectively to driving voltages lower than the minimal voltage at troughs 62 and higher than the maximal voltage that is used in driving the excitation electrodes at peaks 61 to achieve the desired phase modulation profiles. As illustrated by plots 60, 63 and 64, it is beneficial that the extent of the low unused phase modulation range be larger than that of the high unused modulation range, or even more than twice the extent. For example, the extent of the unused low range in Fig. 3A is six wavelengths, while the extent of the high unused range is one wavelength.

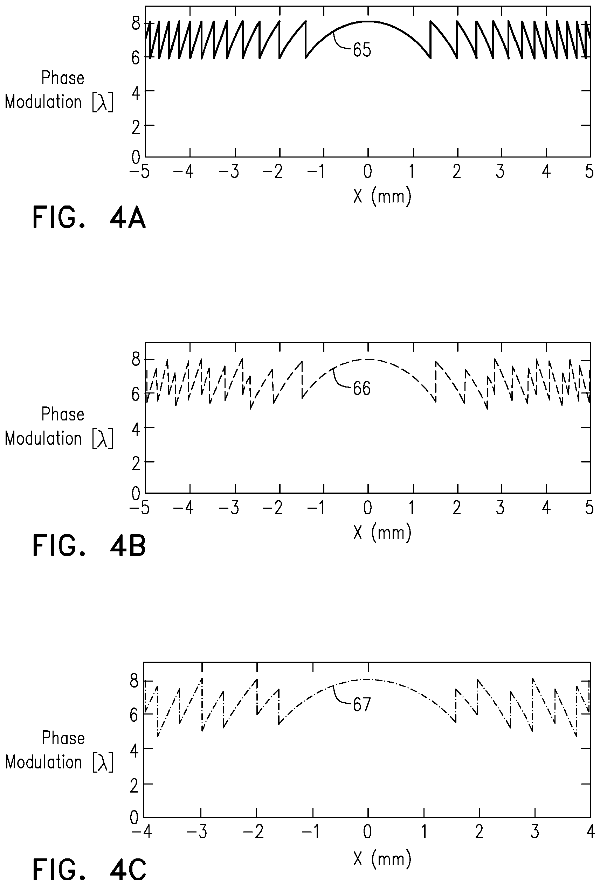

Figs. 4A, 4B and 4C are plots that schematically illustrate phase modulation profiles 65, 66 and 67 applied by an electrically-tunable lens, in accordance with another embodiment of the invention. These profiles may be generated and modified in a similar fashion to the profiles shown in Figs. 3A-3C. In these examples (as well as those shown in Figs. 3A and 3B), the troughs in at least the central zone of the Fresnel lens give rise to a phase modulation of at least four wavelengths, although the troughs may alternatively have larger or smaller modulation depths (for example as shown in Fig. 3C). The phase transition between each peak and the succeeding trough in profiles 65 and 66 is two wavelengths. This sort of behavior can be achieved, for example, by using a liquid crystal in layer 46 with a thickness of 25 µm and birefringence of Δn = 0.18, and applying electrode voltages ranging between 2.7 V and 3.9 V. Alternatively, liquid crystals with other ranges of layer thickness and refractive characteristics may be used (with appropriate adjustment of the driving voltages), as well as other types of electro-optical materials.

Because the phase transitions in profile 65 are all of equal amplitude, optical artifacts could arise due to consistent inaccuracies in the implementation of the phase modulation profile by the electrically-tunable lens. One way of overcoming these artifacts is to vary the phase modulation depths of the troughs, and possible the peaks, as well, as illustrated by profile 66. For example, in profile 66, the depth of phase modulation at the troughs (as well as the peaks) varies across the part of the active area of the electro-optical layer that emulates the Fresnel lens by at least one quarter wavelength of light at a wavelength of 500 nm, or even a half wavelength or more.

In plot 67, shown in Fig. 4C, as in plot 66, each segment of the Fresnel profile uses a different range of phase modulation. In this example the voltage waveforms are chosen such that the distances between the peaks are integer multiples of a given minimal distance, 200 µm in this example. When the lens is shifted laterally in multiples of this distance, i.e., in steps of 200 µm in the present example, more peaks and troughs remain at the same locations compared to implementation that do not use this feature. It can therefore be advantageous to limit shifts of the Fresnel profile to such steps. As a result, the lens can be shifted more smoothly.

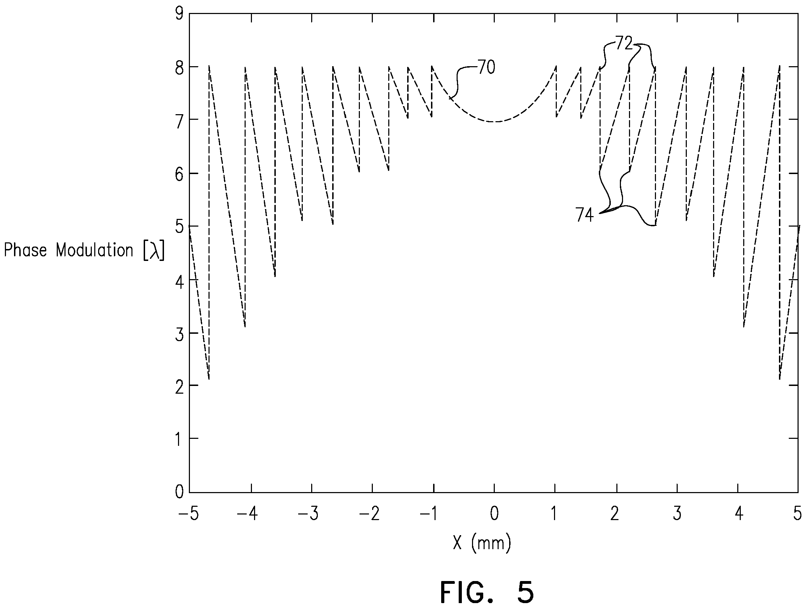

Fig. 5 is a plot that schematically illustrates a phase modulation profile 70 applied by an electrically-tunable lens, such as by optical phase modulator 38, in accordance with another embodiment of the invention. In this case, controller 42 applies the voltage waveforms to electrodes 50 so that the respective amplitudes of the phase transitions between peaks 72 and successive troughs 74 increase monotonically from the central zone of the Fresnel lens outward toward the periphery of the lens area. The use of relatively high voltages in the central region of the lens facilitates rapid adjustment of the lens power, as in the preceding embodiment. At the same time, the larger phase transitions in the peripheral area of the lens spread the peaks and troughs farther apart, and thus improve the optical quality of the lens.

### MATCHING FOCAL AREA TO DISPLAYED ITEMS

Fig. 6 is a schematic pictorial illustration of the operation of an augmented reality system incorporating an electrically-tunable lens, in accordance with an embodiment of the invention. This figure shows elements of system 20 (Fig. 1) in an exploded arrangement that is useful in understanding how optical phase modulators 38 in lens 32 operate in conjunction with display 22 so as to enable the viewer to observe an item 84 of interest in the image projected by display 22 while viewing a scene 90 through the display. As noted earlier, modulators 38 provide this functionality without the addition of a polarizer or additional electrically-tunable lens interposed in the path between the viewer's eye 30 and scene 90.

As explained in reference to Figs. 1A/B, modulators 38 focus light only of a certain, predefined linear polarization, for example a vertical polarization, as illustrated by an arrow 80. Projector 28 projects light of this same polarization toward display 22, as illustrated by an arrow 82. Furthermore, controller 42 drives optical phase modulators 38 to generate a lens profile 86 (such as a Fresnel profile in the present example) only in a small area surrounding an axis 88 running from eye 30 to item 84. As noted above, controller 42 determines the angle of axis 88 and the refractive correction to be applied by lens profile 86 based on the content projected by display and/or the gaze direction indicated by eye tracker 34. Outside the limited area of lens profile 86, optical phase modulator 38 applies a constant phase modulation to the incident light, meaning that the optical phase modulator exerts no optical power over most of its area.

Most of the light coming from scene 90 will thus pass through optical phase modulators 38 unaffected: Optical phase modulator 38 has no effect at all on light of the polarization orthogonal to that indicated by arrow 80. Even light of the same polarization as that indicated by arrow 80 will be largely unaffected outside the area of lens profile 86. It is therefore desirable that the area of the lens profile be kept small, encompassing item 84 but extending only minimally beyond the bounds of the item of interest. For example, the area over which the refractive correction is applied may have an angular width, relative to the eye, that is no greater than 5°. Thus, when the viewer looks at item 84, he or she will see it in good focus, thanks to lens profile 86; whereas the viewer will see scene 90 clearly over all the remaining field of view.

In order to avoid optical artifacts at the edges of lens profile 86, it can be useful to drive optical phase modulator 38 to create a region in which the optical power is gradually reduced around the periphery of profile 86, for example as described in the above-mentioned PCT Patent Application PCT/IB2018/054957 (referring to Figs. 9A-9E in that application). As a result, an item 92 falling in or around the periphery of profile 86 may appear distorted to the viewer, thus causing an undesirable visual distraction. To mitigate this sort of problem, controller 34 instructs projector 28 to digitally blur parts of the projected image, such as item 92, that are projected outside the viewing aperture of profile 86. Because item 92 falls outside the area of sharp foveal vision of eye 30, the viewer will not be disturbed by the blur.

It will be appreciated that the embodiments described above are cited by way of example, and that the present invention as defined in the appending claims includes both combinations and subcombinations of the various features described hereinabove, as well as variations and modifications thereof which would occur to persons skilled in the art upon reading the foregoing description and which are not disclosed in the prior art.

## Claims

1. Optical apparatus (38), comprising:
a transparent envelope (43, 44);
an electro-optical layer (46), contained within the envelope and having an effective local index of refraction at any given location that is determined by a voltage waveform applied across the electro-optical layer at the location;
an array of excitation electrodes (50) disposed over a surface of the transparent envelope; and
control circuitry (42), which is configured to apply voltage waveforms to the excitation electrodes so as to generate across at least a part of the active area of the electro-optical layer a phase modulation profile (60, 63, 64, 65, 66, 67, 70) comprising spatially alternating peaks (61) and troughs (62) separated by phase transitions chosen so as to emulate a Fresnel lens, **characterized in that** the troughs have respective phase modulation depths that vary by at least one quarter wavelength at a nominal wavelength of 500 nm across at least the part of the active area of the electro-optical layer that emulates the Fresnel lens.

2. The apparatus according to claim 1, wherein the respective phase modulation depths of the troughs vary by at least one half wavelength at the nominal wavelength across the part of the active area of the electro-optical layer that emulates the Fresnel lens.

3. The apparatus according to claim 1, wherein the phase transitions have respective amplitudes that increase monotonically from a central zone of the Fresnel lens outward toward a periphery of the part of the active area of the electro-optical layer that emulates the Fresnel lens.

4. The apparatus according to claim 1, wherein the phase modulation depths at the troughs in at least a central zone of the Fresnel lens are at least four wavelengths of light at the nominal wavelength.

5. The apparatus according to claim 1, wherein the peaks have respective peak phase modulations that vary across the part of the active area of the electro-optical layer that emulates the Fresnel lens by at least one quarter wavelength at the nominal wavelength.

6. The apparatus according to claim 1, wherein the array of excitation electrodes has an average pitch, and the peaks in the phase modulation profile are spaced apart by integer multiples of a value that is at least three times the average pitch.

7. The apparatus according to claim 1, wherein the phase modulation profile comprises a phase modulation over at least 90% of the part of the active area emulating the Fresnel lens that is less than 70% of an available dynamic phase modulation range of the electro-optical layer.

8. The apparatus according to any of claims 1-7, wherein the excitation electrodes comprise parallel conductive stripes extending across a first surface of the transparent envelope, and the apparatus comprises a transparent common electrode on a second surface of the transparent envelope, opposite the first surface, and wherein the control circuitry is configured to apply the voltage waveforms to the excitation electrodes so that the phase modulation profile emulates a cylindrical Fresnel lens.

9. The apparatus according to any of claims 1-7, wherein the control circuitry is configured to modify the voltage waveforms so as to change a focal power of the Fresnel lens emulated by the phase modulation profile.

10. The apparatus according to any of claims 1-7, wherein the control circuitry is configured to modify the voltage waveforms so as to shift and optical center of the Fresnel lens emulated by the phase modulation profile.

11. The apparatus according to claim 10, wherein the control circuitry is configured to apply the voltage waveforms so that outside the part of the active area that is in proximity to the optical center of the Fresnel lens, the electro-optical layer applies a constant phase modulation to light that is incident on the apparatus.

12. The apparatus according to any of claims 1-7, wherein the electro-optical layer comprises a liquid crystal.

13. A method for optical correction, comprising:
providing an electro-optical modulator (38) comprising a transparent envelope (43, 44) containing an electro-optical layer (46) having an effective local index of refraction at any given location that is determined by a voltage waveform applied across the electro-optical layer at the location, with an array of excitation electrodes (50) disposed over a surface of the transparent envelope; and
applying voltage waveforms to the excitation electrodes so as to generate across at least a part of the active area of the electro-optical layer a phase modulation profile (60, 63, 64, 65, 66, 67, 70) comprising spatially alternating peaks (61) and troughs (62) separated by phase transitions chosen so as to emulate a Fresnel lens, while the troughs have respective phase modulation depths that vary by at least one quarter wavelength at a nominal wavelength of 500 nm across at least the part of the active area of the electro-optical layer that emulates the Fresnel lens.

14. The method according to claim 13, wherein the respective phase modulation depths of the troughs vary by at least one half wavelength at tghe nominal wavelength across the part of the active area of the electro-optical layer that emulates the Fresnel lens.

15. The method according to claim 13, wherein the phase transitions have respective amplitudes that increase monotonically from a central zone of the Fresnel lens outward toward a periphery of the part of the active area of the electro-optical layer that emulates the Fresnel lens.

## Patentansprüche

1. Optische Vorrichtung (38), umfassend:
eine transparente Umhüllung (43, 44);
eine elektrooptische Schicht (46), die in der Umhüllung enthalten ist und an jeder beliebigen Stelle einen effektiven lokalen Brechungsindex aufweist, der durch eine an die elektrooptische Schicht an dieser Stelle angelegte Spannungswellenform bestimmt wird;
ein Array von Erregungselektroden (50), die über einer Oberfläche der transparenten Hülle angeordnet sind; und
eine Steuerschaltung (42), die dazu konfiguriert ist, Spannungswellenformen an die Erregungselektroden anzulegen, um über mindestens einen Teil der aktiven Fläche der elektrooptischen Schicht ein Phasenmodulationsprofil (60, 63, 64, 66, 67, 70) zu erzeugen, das räumlich alternierende Spitzen (61) und Täler (62) umfasst, die durch Phasenübergänge getrennt sind, die so gewählt sind, dass sie eine Fresnel-Linse emulieren, **dadurch gekennzeichnet, dass**
die Täler jeweilige Phasenmodulationstiefen aufweisen, die um mindestens eine Viertelwellenlänge bei einer Nennwellenlänge von 500 nm über mindestens den Teil des aktiven Bereichs der elektrooptischen Schicht, der die Fresnellinse emuliert, variieren.

2. Vorrichtung nach Anspruch 1, wobei die jeweiligen Phasenmodulationstiefen der Täler um mindestens eine halbe Wellenlänge bei der Nennwellenlänge über den Teil der aktiven Fläche der elektrooptischen Schicht, der die Fresnel-Linse emuliert, variieren.

3. Vorrichtung nach Anspruch 1, wobei die Phasenübergänge jeweilige Amplituden aufweisen, die monoton von einer zentralen Zone der Fresnel-Linse nach außen in Richtung einer Peripherie des Teils des aktiven Bereichs der elektrooptischen Schicht, der die Fresnel-Linse emuliert, zunehmen.

4. Vorrichtung nach Anspruch 1, wobei die Phasenmodulationstiefen an den Tälern in mindestens einer zentralen Zone der Fresnel-Linse mindestens vier Wellenlängen des Lichts bei der Nennwellenlänge betragen.

5. Vorrichtung nach Anspruch 1, wobei die Spitzen jeweilige Spitzenphasenmodulationen aufweisen, die über den die Fresnel-Linse emulierenden Teil der aktiven Fläche der elektrooptischen Schicht um mindestens eine Viertelwellenlänge bei der Nennwellenlänge variieren.

6. Vorrichtung nach Anspruch 1, wobei das Array von Anregungselektroden einen durchschnittlichen Abstand aufweist und die Spitzen im Phasenmodulationsprofil durch ganzzahlige Vielfache eines Wertes, der mindestens das Dreifache des durchschnittlichen Abstands beträgt, voneinander beabstandet sind.

7. Vorrichtung nach Anspruch 1, wobei das Phasenmodulationsprofil eine Phasenmodulation über mindestens 90 % des Teils der die Fresnellinse emulierenden aktiven Fläche umfasst, die weniger als 70 % eines verfügbaren dynamischen Phasenmodulationsbereichs der elektrooptischen Schicht beträgt.

8. Vorrichtung nach einem der Ansprüche 1 bis 7, wobei die Anregungselektroden parallele leitende Streifen umfassen, die sich über eine erste Oberfläche der transparenten Umhüllung erstrecken, und die Vorrichtung eine transparente gemeinsame Elektrode auf einer der ersten Oberfläche gegenüberliegenden zweiten Oberfläche der transparenten Umhüllung umfasst, und wobei die Steuerschaltung dazu konfiguriert ist, die Spannungswellenformen an die Anregungselektroden anzulegen, so dass das Phasenmodulationsprofil eine zylindrische Fresnel-Linse emuliert.

9. Vorrichtung nach einem der Ansprüche 1 bis 7, wobei die Steuerschaltung dazu konfiguriert ist, die Spannungswellenformen zu modifizieren, um eine Brechkraft der durch das Phasenmodulationsprofil emulierten Fresnel-Linse zu ändern.

10. Vorrichtung nach einem der Ansprüche 1 bis 7, wobei die Steuerschaltung dazu konfiguriert ist, die Spannungswellenformen zu modifizieren, um ein optisches Zentrum der durch das Phasenmodulationsprofil emulierten Fresnel-Linse zu verschieben.

11. Vorrichtung nach Anspruch 10, wobei die Steuerschaltung dazu konfiguriert ist, die Spannungswellenformen anzulegen, so dass die elektrooptische Schicht außerhalb des Teils der aktiven Fläche, der sich in der Nähe des optischen Zentrums der Fresnel-Linse befindet, eine konstante Phasenmodulation auf das auf die Vorrichtung einfallende Licht anwendet.

12. Vorrichtung nach einem der Ansprüche 1 bis 7, wobei die elektro-optische Schicht einen Flüssigkristall umfasst.

13. Verfahren zur optischen Korrektur, umfassend:
Bereitstellen eines elektrooptischen Modulators (38), umfassend eine transparente Umhüllung (43, 44), die eine elektrooptische Schicht (46) enthält, die an jeder beliebigen Stelle einen effektiven lokalen Brechungsindex aufweist, der durch eine an die elektrooptische Schicht an dieser Stelle angelegte Spannungswellenform bestimmt wird, mit einem Array von Anregungselektroden (50), die über einer Oberfläche der transparenten Umhüllung angeordnet sind; und
Anlegen von Spannungswellenformen an die Anregungselektroden, um über mindestens einen Teil der aktiven Fläche der elektrooptischen Schicht ein Phasenmodulationsprofil (60, 63, 64, 65, 66, 67, 70) zu erzeugen, das räumlich abwechselnde Spitzen (61) und Täler (62) umfasst, die durch Phasenübergänge getrennt sind, die so gewählt sind, dass sie eine Fresnel-Linse emulieren, während die Täler jeweilige Phasenmodulationstiefen aufweisen, die um mindestens eine Viertelwellenlänge bei einer Nennwellenlänge von 500 nm über mindestens den Teil des aktiven Bereichs der elektrooptischen Schicht, der die Fresnellinse emuliert, variieren.

14. Verfahren nach Anspruch 13, wobei die jeweiligen Phasenmodulationstiefen der Täler um mindestens eine halbe Wellenlänge bei der Nennwellenlänge über den Teil der aktiven Fläche der elektrooptischen Schicht, der die Fresnellinse emuliert, variieren.

15. Verfahren nach Anspruch 13, wobei die Phasenübergänge jeweilige Amplituden aufweisen, die monoton von einer zentralen Zone der Fresnellinse nach außen in Richtung einer Peripherie des Teils der aktiven Fläche der elektrooptischen Schicht, der die Fresnellinse emuliert, zunehmen.

## Revendications

1. Appareil optique (38), comprenant :
une enveloppe transparente (43, 44) ;
une couche électro-optique (46), contenue à l'intérieur de l'enveloppe et ayant un indice de réfraction local effectif à tout emplacement donné qui est déterminé par une forme d'onde de tension appliquée à travers la couche électro-optique à l'emplacement ;
un réseau d'électrodes d'excitation (50) disposées sur une surface de l'enveloppe transparente ; et
un circuit de commande (42), qui est configuré pour appliquer des formes d'onde de tension aux électrodes d'excitation de manière à générer à travers au moins une partie de la zone active de la couche électro-optique un profil de modulation de phase (60, 63, 64, 65, 66, 67, 70) comprenant des pics (61) et des creux (62) spatialement alternés séparés par des transitions de phase choisies de manière à émuler une lentille de Fresnel,
**caractérisé en ce que** les creux ont des profondeurs de modulation de phase respectives qui varient d'au moins un quart de longueur d'onde à une longueur d'onde nominale de 500 nm à travers au moins la partie de la zone active de la couche électro-optique qui émule la lentille de Fresnel.

2. Appareil selon la revendication 1, dans lequel les profondeurs de modulation de phase respectives des creux varient d'au moins une demi-longueur d'onde à la longueur d'onde nominale à travers la partie de la zone active de la couche électro-optique qui émule la lentille de Fresnel.

3. Appareil selon la revendication 1, dans lequel les transitions de phase ont des amplitudes respectives qui augmentent de façon monotone depuis une zone centrale de la lentille de Fresnel vers l'extérieur vers une périphérie de la partie de la zone active de la couche électro-optique qui émule la lentille de Fresnel.

4. Appareil selon la revendication 1, dans lequel les profondeurs de modulation de phase au niveau des creux dans au moins une zone centrale de la lentille de Fresnel sont d'au moins quatre longueurs d'onde de lumière à la longueur d'onde nominale.

5. Appareil selon la revendication 1, dans lequel les pics ont des modulations de phase de pic respectives qui varient à travers la partie de la zone active de la couche électro-optique qui émule la lentille de Fresnel d'au moins un quart de longueur d'onde à la longueur d'onde nominale.

6. Appareil selon la revendication 1, dans lequel le réseau d'électrodes d'excitation a une hauteur moyenne, et les pics dans le profil de modulation de phase sont espacés par des multiples entiers d'une valeur qui est au moins trois fois la hauteur moyenne.

7. Appareil selon la revendication 1, dans lequel le profil de modulation de phase comprend une modulation de phase sur au moins 90 % de la partie de la zone active émulant la lentille de Fresnel qui est inférieure à 70 % d'une plage de modulation de phase dynamique disponible de la couche électro-optique.

8. Appareil selon l'une quelconque des revendications 1 à 7, dans lequel les électrodes d'excitation comprennent des bandes conductrices parallèles s'étendant à travers une première surface de l'enveloppe transparente, et l'appareil comprend une électrode commune transparente sur une seconde surface de l'enveloppe transparente, opposée à la première surface, et dans lequel le circuit de commande est configuré pour appliquer les formes d'onde de tension aux électrodes d'excitation de manière à ce que le profil de modulation de phase émule une lentille de Fresnel cylindrique.

9. Appareil selon l'une quelconque des revendications 1 à 7, dans lequel le circuit de commande est configuré pour modifier les formes d'onde de tension de manière à changer une puissance focale de la lentille de Fresnel émulée par le profil de modulation de phase.

10. Appareil selon l'une quelconque des revendications 1 à 7, dans lequel le circuit de commande est configuré pour modifier les formes d'onde de tension de manière à déplacer un centre optique de la lentille de Fresnel émulée par le profil de modulation de phase.

11. Appareil selon la revendication 10, dans lequel le circuit de commande est configuré pour appliquer les formes d'onde de tension de sorte qu'à l'extérieur de la partie de la zone active qui est à proximité du centre optique de la lentille de Fresnel, la couche électro-optique applique une modulation de phase constante à la lumière qui est incidente sur l'appareil.

12. Appareil selon l'une quelconque des revendications 1 à 7, dans lequel la couche électro-optique comprend un cristal liquide.

13. Procédé de correction optique, comprenant les étapes consistant à :
fournir un modulateur électro-optique (38) comprenant une enveloppe transparente (43, 44) contenant une couche électro-optique (46) ayant un indice de réfraction local effectif à tout emplacement donné qui est déterminé par une forme d'onde de tension appliquée à travers la couche électro-optique à l'emplacement, avec un réseau d'électrodes d'excitation (50) disposées sur une surface de l'enveloppe transparente ; et
appliquer des formes d'onde de tension aux électrodes d'excitation de manière à générer à travers au moins une partie de la zone active de la couche électro-optique un profil de modulation de phase (60, 63, 64, 65, 66, 67, 70) comprenant des pics (61) et des creux (62) spatialement alternés séparés par des transitions de phase choisies de manière à émuler une lentille de Fresnel, tandis que les creux ont des profondeurs de modulation de phase respectives qui varient d'au moins un quart de longueur d'onde à une longueur d'onde nominale de 500 nm à travers au moins la partie de la zone active de la couche électro-optique qui émule la lentille de Fresnel.

14. Procédé selon la revendication 13, dans lequel les profondeurs de modulation de phase respectives des creux varient d'au moins une demi-longueur d'onde à la longueur d'onde nominale à travers la partie de la zone active de la couche électro-optique qui émule la lentille de Fresnel.

15. Procédé selon la revendication 13, dans lequel les transitions de phase ont des amplitudes respectives qui augmentent de façon monotone depuis une zone centrale de la lentille de Fresnel vers l'extérieur vers une périphérie de la partie de la zone active de la couche électro-optique qui émule la lentille de Fresnel.
